# EUROPÄISCHE PATENTSCHRIFT

(11) **EP 1 161 626 B1**
(45) Veröffentlichungstag und Bekanntmachung des Hinweises auf die Patenterteilung: **13.10.2004**
(21) Anmeldenummer: 00915123.4
(22) Anmeldetag: 02.03.2000
(51) Int. Cl.: F02M 35/104

(54) **SAUGANLAGE FÜR EINE BRENNKRAFTMASCHINE**
SUCTION SYSTEM FOR AN INTERNAL COMBUSTION ENGINE
INSTALLATION D'ASPIRATION POUR MOTEUR A COMBUSTION INTERNE

(30) Priorität: 08.03.1999 DE 19909850
(43) Veröffentlichungstag der Anmeldung: 12.12.2001
(60) Teilanmeldung: 04003211.2
(73) Patentinhaber: MAHLE Filtersysteme GmbH, 70376 Stuttgart (DE); Dr.Ing. h.c. F. Porsche Aktiengesellschaft, 71287 Weissach (DE)
(72) Erfinder: BRODESSER, Kay, D-71277 Rutesheim (DE); DRESPLING, Hans-Peter, D-89522 Heidenheim (DE); JENSEN, Hans, D-73237 Kirchheim (DE); KACHLER, Günter, D-74379 Ingersheim (DE); SCHNEIDER, Horst, D-71336 Waiblingen (DE); STEHLIG, Jürgen, D-72666 Neckartailfingen (DE); KELM, Joachim, D-75177 Pforzheim (DE); DIETERLE, Frank, D-71254 Ditzingen (DE)
(74) Vertreter: Bernhard, Uwe
(86) Internationale Anmeldenummer: PCT/DE2000/000585
(87) Internationale Veröffentlichungsnummer: WO 2000/053919

(56) Entgegenhaltungen:
- EP-A- 0 155 685
- EP-A- 0 567 702
- EP-A- 0 984 155
- EP-A- 0 984 156
- DE-A- 19 647 184

## Beschreibung

Die Erfindung betrifft eine Sauganlage aus Kunststoff, die bei einer Brennkraftmaschine die über eine Luftzuführung für die Verbrennung in der Brennkraftmaschine vorgesehene Luft auf einzelne Brennkammern der Brennkraftmaschine verteilt. Die Erfindung betrifft außerdem ein Verfahren zur Herstellung einer derartigen Sauganlage.

Üblicherweise weist eine derartige Sauganlage einen Luftverteiler auf, der an die genannte Luftzuführung der Brennkraftmaschine angeschlossen ist und in dem sich die zugeführte Luft sammelt bzw. auf einzelne Saugrohre verteilt. Diese Saugrohre münden dabei einenends in den Luftverteiler und anderenends an der jeweils zugeordneten Brennkammer der Brennkraftmaschine. Zweckmäßigerweise ist für den Anschluß der Saugrohre an die Brennkammern bzw. an den Motorblock der Brennkraftmaschine ein Flansch vorgesehen, der mit den jeweiligen Saugrohren verbunden ist.

Aus der DE 42 16 255 A1 ist eine Sauganlage der eingangs genannten Art bekannt, deren Luftverteiler mit den Saugrohren einteilig ausgebildet und in Blasformtechnik hergestellt ist. Auch die EP 0 567 702 B1 zeigt eine solche Sauganlage, deren Luftverteiler mit den Saugrohren einteilig ausgebildet und in Blasformtechnik hergestellt ist, wobei an die Saugrohre ein Flansch angespritzt wird.

Aus der EP 0 155 685 A2 ist eine Sauganlage bekannt, deren Luftverteiler über Saugrohre mit Flanschen verbunden ist, die ihrerseits an Zylinderbänken einer Brennkraftmaschine befestigt sind. Dabei sind die Saugrohre zweiteilig ausgebildet und bestehen jeweils aus einem U-fömig gebogenen oberen Rohrabschnitt, der seitlich an den Luftverteiler angeschlossen ist, und aus einem im wesentlichen ungebogenen Verlängerungsabschnitt, der an den jeweiligen Flansch angeschlossen ist. Dabei sind die Saugrohre so geführt, dass sich benachbarte Saugrohre unterhalb des Luftverteilers kreuzen.

Aus der EP 0 984 155 A2 und aus der EP 0 984 156 A2 sind Sauganlagen bekannt, deren Saugrohre jeweils aus zwei komplementären Hälften zusammengesetzt sind.

Eine derartige Sauganlage wird, insbesondere aus Gewichtsgründen, bei modernen Brennkraftmaschinen aus Kunststoff hergestellt. Aufgrund der gekrümmten Form der Saugrohre ist die Herstellung der Sauganlage jedoch relativ aufwendig. Eine bekannte Sauganlage wird beispielsweise aus zwei komplementären Halbteilen gebildet, die jeweils durch ein Spritzgußverfahren hergestellt sind und komplexe Formen aufweisen. Beide Halbteile weisen dabei jeweils einen halbschalenartigen Bestandteil der Saugrohre auf. Erst durch die Verbindung beider Halbteile werden die Saugrohre vollständig ausgebildet. Zur Verbindung der beiden Halbteile wird ein Schweißverfahren, insbesondere ein Reibschweißverfahren, durchgeführt, bei dem vollständig um die Halbteile und um jede Saugrohrhalbschale umlaufende Schweißkragen miteinander verbunden werden. Bei einer derart ausgebildeten Sauganlage ist wegen den Schweißkragen ein Mindestabstand zwischen benachbarten Saugrohren erforderlich, um das jeweilige Schweißverfahren zur Verbindung der Halbteile durchführen zu können. Die bekannte Sauganlage kann daher nicht für eine besonders kompakt ausgestaltete Brennkraftmaschine verwendet werden.

Bei einer anderen Sauganlage wird zumindest ein die Saugrohre vollständig enthaltender komplexer Abschnitt einteilig als Spritzgußbauteil mit Hilfe eines Kernschmelzverfahrens hergestellt. Diese Sauganlage kann aufgrund der fehlenden Schweißkragen so ausgebildet werden, daß sie auch für relativ kompakte Brennkraftmaschinen verwendet werden kann. Jedoch ist ein Spritzguß mit einem Kernschmelzverfahren kostenintensiv.

Darüber hinaus besteht bei den bekannten Kunststoffsauganlagen der Nachteil, daß jede kleine Änderung in der Ausgestaltung der Sauganlage, um diese beispielsweise an Anbaubedingungen, Motortypen od.dgl. anzupassen, stets mit hohen Werkzeugkosten verbunden ist. Denn die komplex geformten Spritzgußteile erfordern entsprechend aufwendige und daher teure Werkzeuge.

Die vorliegende Erfindung beschäftigt sich mit dem Problem, für eine Sauganlage der eingangs genannten Art eine Ausführungsform anzugeben, die relativ preiswert an unterschiedliche Einbausituationen, Motortypen od.dgl. angepaßt werden kann.

Dieses Problem wird erfindungsgemäß durch eine Sauganlage mit den Merkmalen des Anspruches 1 gelöst.

Die Erfindung beruht auf dem allgemeinen Gedanken, die einzelnen Bestandteile der Sauganlage, zumindest den Luftverteiler, die Saugrohre und den Flansch, jeweils als einteilige Module auszubilden, die nach Art eines Baukastensystems zu beliebigen Konfigurationen der Sauganlage miteinander verbunden werden können. Insbesondere können verschiedene Saugrohrmodule, Luftverteilermodule und Flanschmodule vorgesehen bzw. hergestellt werden, wobei die jeweiligen Verbindungsstellen bzw. Schnittstellen so weit vereinheitlicht sind, daß die verschiedenen Module vielfältig miteinander kombiniert werden können.

Die Flexibilität einer derartig aufgebauten Sauganlage liegt auf der Hand, da einerseits für Veränderungen, die nur einen Bestandteil der Sauganlage betreffen, lediglich die diesbezüglichen Herstellungskosten, insbesondere Werkzeugkosten, aufgebracht werden müssen, da die übrigen Bestandteile der Sauganlage unverändert weiterverwendet werden können. Zum anderen ergibt sich dadurch auch die Möglichkeit, parallel unterschiedlich konfigurierte Sauganlagen herzustellen. Beispielsweise können dieselben Saugrohrmodule sowohl für einen 4-Zylinder-Motor als auch für einen 8-Zylinder-Motor verwendet werden. Während bei einer herkömmlichen Sauganlage zur Herstellung von zwei unterschiedlichen Ausführungsformen regelmäßig auch die doppelten Herstellungskosten anfallen, sind bei der erfindungsgemäßen Sauganlage die Kosten zur Herstellung unterschiedlicher Varianten erheblich niedriger. Auf diese Weise ergibt sich auch für die Ausgestaltung der damit auszustattenden Brennkraftmaschine mehr Flexibilität.

Entsprechend einer bevorzugten Ausführungsform kann jedes Saugrohrmodul als Blasteil ausgebildet sein, d.h. das Saugrohrmodul ist dann ein durch ein Blasformverfahren hergestelltes Bauteil. Damit das Saugrohrmodul als Blasteil hergestellt werden kann, muß es aus einem Kunststoff bestehen, der eine entsprechende Viskosität aufweist. Ein als Blasteil ausgebildetes Saugrohrmodul weist eine besonders hochwertige innenliegende Oberfläche auf, wodurch die Durchströmung des Saugrohrmodules optimal gestaltet werden kann. Darüber hinaus kann ein Blasformverfahren besonders preiswert zur Ausbildung unterschiedlicher Formen des dadurch hergestellten Blasteiles variiert werden. Dementsprechend ist die Herstellung unterschiedlicher Varianten des Saugrohrmoduls und somit der Sauganlage relativ preiswert.

Gemäß einer besonders vorteilhaften Ausführungsform kann jedes Flanschmodul als Spritzteil ausgebildet sein, d.h. das Flanschmodul ist ein durch ein Spritzgußverfahren hergestelltes Bauteil, wobei dieses Flanschmodul dadurch ausgebildet wird, daß es an die zugehörigen Saugrohrmodule angespritzt wird, wobei außerdem das jeweilige Rohrende des jeweiligen Saugrohrmoduls so geformt ist, daß sich zwischen dem Saugrohrmodul und dem Flanschmodul eine formschlüssige Verbindung ausbildet. Ein solcher Formschluß wird insbesondere dadurch erzielt, daß sich der Rohrquerschnitt in Erstreckungsrichtung erweitert, wobei das angespritzte Material des Flansches diese Querschnittserweiterung umfaßt und einbettet. Durch die erfindungsgemäße Maßnahme wird das Flanschmodul bereits während seiner Herstellung mit den zugehörigen Saugrohrmodulen verbunden, so daß zusätzliche Montageschritte entfallen.

Bei einer anderen Ausführungsform, die an eine Brennkraftmaschine mit zwei Zylinderbänken, insbesondere an einen V-Motor, angepaßt ist, können zwei Flanschmodule vorgesehen sein, die jeweils einer Zylinderbank der Brennkraftmaschine zugeordnet sind, wobei die Saugrohrmodule nebeneinander angeordnet und abwechselnd mit dem einen Flanschmodul und mit dem anderen Flanschmodul verbunden sind. Insbesondere kann sich jedes Flanschmodul entlang einer Seite des Luftverteilermoduls parallel dazu erstrecken, wobei die zugehörigen Saugrohrmodule in einem von dieser Seite abgewandten Bereich des Luftverteilermoduls mit diesem verbunden sind. Bei zwei Flanschmodulen ergibt sich daher eine Konstellation, bei der sich die Flanschmodule entlang gegenüberliegender Seiten des Luftverteilermoduls erstrecken und die dem einen Flanschmodul zugeordneten Saugrohrmodule zwischen den Flanschmodulen neben den dem anderen Flanschmodul zugeordneten Saugrohrmodulen verlaufen. Jede dieser Ausführungsformen weist einen besonders kompakten Aufbau auf, der durch die erfindungsgemäße Sauganlage besonders einfach erreichbar ist.

Die Flexibilität der erfindungsgemäßen Sauganlage kann dadurch gesteigert werden, daß auch das Luftverteilermodul modular aufgebaut ist und aus einem einteiligen Luftverteileroberteilmodul und aus einem einteiligen Luftverteilerunterteilmodul besteht, wobei die Saugrohrmodule vorzugsweise mit dem Luftverteileroberteilmodul verbunden sind.

Das der Erfindung zugrundeliegende Problem wird auch durch ein Verfahren gemäß Anspruch 11 gelöst. Ein besonderer Vorteil dieses Verfahren wird darin gesehen, daß bei jeder Anformung bzw. Anbindung eines weiteren Moduls' toleranzbedingte sowie durch Schrumpfvorgänge verursachte Lage- und Formabweichungen der Module korrigiert werden können, so daß die erfindungsgemäße Sauganlage schließlich relativ enge Toleranzen einhalten kann.

Weitere wichtige Merkmale und Vorteile der erfindungsgemäßen Sauganlage ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind.

Ein bevorzugtes Ausführungsbeispiel der Erfindung ist in den Zeichnungen dargestellt und wird in der nachfolgenden Beschreibung näher erläutert.

Es zeigen, jeweils schematisch,
- Fig. 1: eine Draufsicht auf eine erfindungsgemäße Sauganlage,
- Fig. 2: eine Seitenansicht entsprechend dem Pfeil II in Fig. 1 auf die Sauganlage,
- Fig. 3: eine Frontansicht entsprechend dem Pfeil III in Fig. 1 auf die Sauganlage und
- Fig. 4: eine Schnittansicht entsprechend der Schnittlinie IV in Fig. 1 durch die Sauganlage, wobei die in Blickrichtung hinter der Schnittebene angeordneten Bestandteile der Sauganlage zur Vereinfachung der Darstellung weggelassen sind.

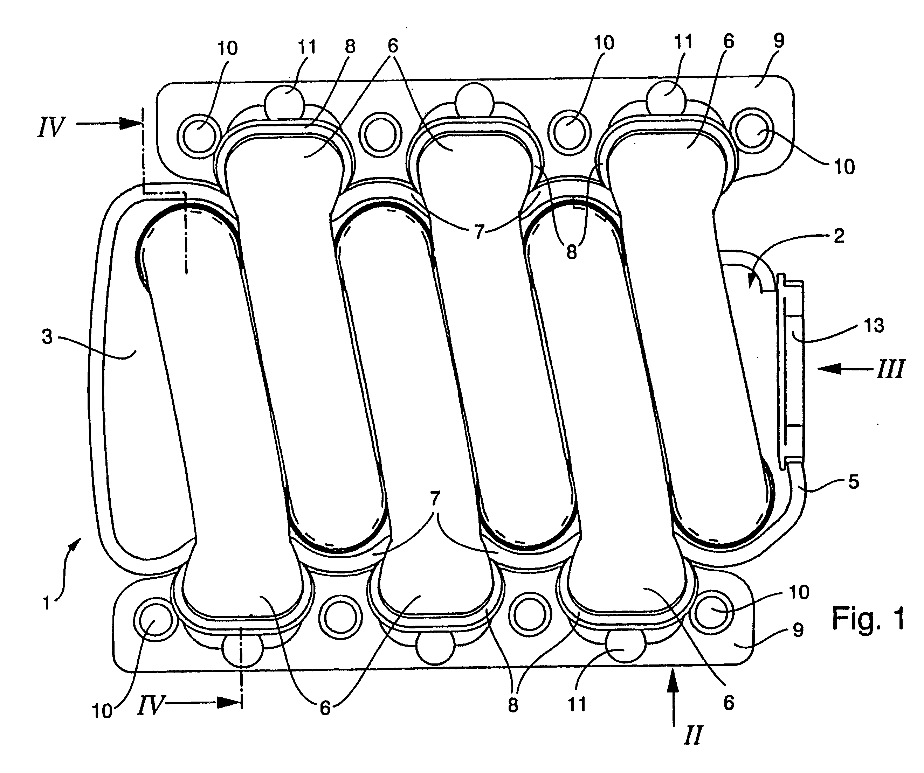

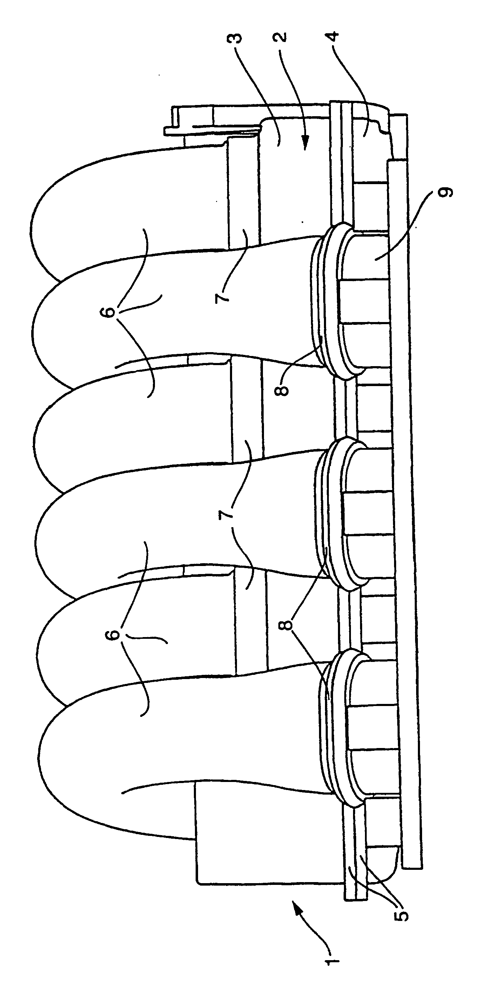

Entsprechend den Fig. 1 bis 4 weist eine erfindungsgemäße Sauganlage 1 ein Luftverteilermodul 2 auf, das modular aufgebaut ist und aus einem gemäß den Fig. 2, 3, 4 oberen einteiligen Luftverteileroberteilmodul 3 und aus einem gemäß den Fig. 2, 3, 4 unteren einteiligen Luftverteilerunterteilmodul 4 besteht. Das Luftverteileroberteilmodul 3 und das Luftverteilerunterteilmodul 4 weisen jeweils einen nach außen abstehenden, vollständig umlaufenden Kragen oder Bund 5 auf, an dem die beiden Module 3 und 4 miteinander verbunden sind.

An der Oberseite des Luftverteileroberteilmoduls 3 sind mehrere, hier sechs, jeweils einteilige Saugrohrmodule 6 angeschlossen bzw. mit dem Luftverteileroberteilmodul 3 und somit mit dem Luftverteilermodul 2 verbunden. Jedes dieser Saugrohrmodule 6 ist einem Zylinder einer nicht dargestellten Brennkraftmaschine zugeordnet und dient zur Luftversorgung der jeweils zugehörigen Brennkammer. Während die Luftverteilermodule 6 an ihrem einen Rohrende 7 mit dem Luftverteilermodul 2 verbunden sind, sind sie mit ihrem anderen Rohrende 8 mit einem Flanschmodul 9 verbunden, das an der Brennkraftmaschine befestigbar ist. Zu diesem Zweck weist das Flanschmodul 9 entsprechende Montageöffnungen 10 auf.

Bei der in den Figuren dargestellten Ausführungsform ist die Sauganlage 1 für einen 6-Zylinder-V-Motor konfiguriert, so daß dementsprechend zwei Flanschmodule 9 vorgesehen sind. Die Flanschmodule 9 erstrecken sich dabei jeweils entlang einer Seite des Luftverteilermoduls 2. Die sechs Saugrohrmodule 6 sind nebeneinander angeordnet und abwechselnd mit dem einen bzw. mit dem anderen Flanschmodul 9 verbunden. Darüber hinaus sind die Saugrohrmodule 6 jedes Flanschmodules 9 jeweils in einem dem anderen Flanschmodul 9 zugewandten Bereich des Luftverteilermoduls 2 an das Luftverteilermodul 2 angeschlossen, wodurch benachbarte Saugrohrmodule 6 oberhalb des Luftverteilermoduls 2 parallel zueinander und aneinander entlang verlaufen. Wie aus den Fig. 1 bis 3 zu entnehmen ist, ergibt sich dadurch eine besonders kompakte Bauform für die erfindungsgemäße Sauganlage 1.

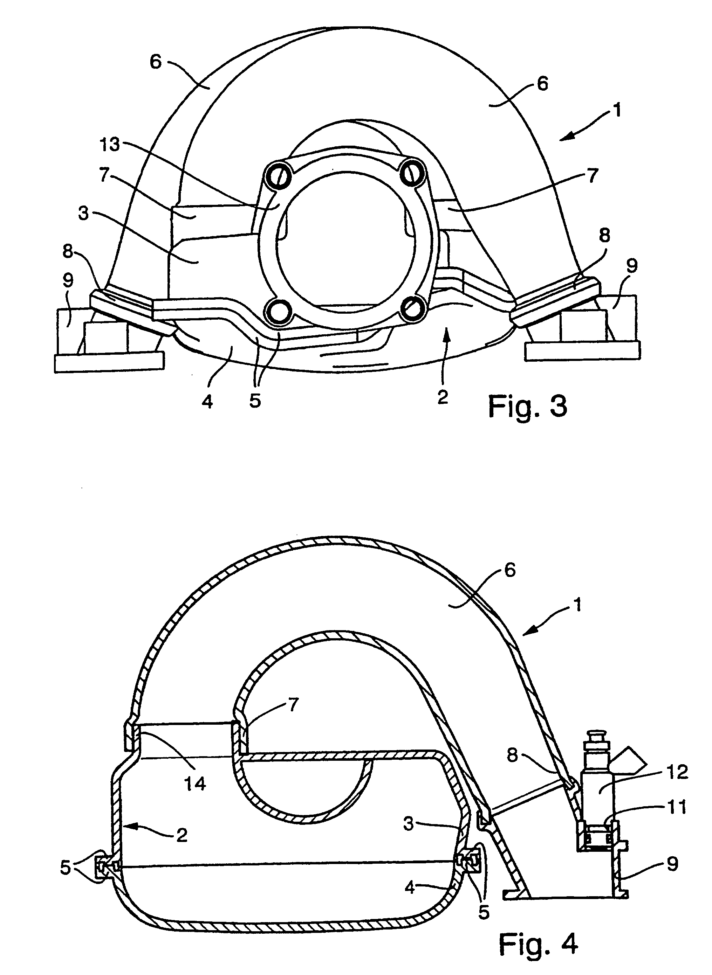

In den Flanschmodulen 9 sind Aufnahmen 11 ausgespart, in denen ein Einspritzventil 12 montierbar ist, was in Fig. 4 angedeutet ist.

Das Luftverteileroberteilmodul 3 ist außerdem an einer Frontseite der Sauganlage 1 mit einem Anschluß 13 ausgestattet, mit dem die Sauganlage 1 an eine Luftzuführung der Brennkraftmaschine anschließbar ist. Die durch diese Luftzuführung der Sauganlage 1 zugeführte Luft dringt zunächst in das Luftverteilermodul 2 ein, wird dort gesammelt und dann auf die einzelnen Saugrohrmodule 6 verteilt, von wo aus die zugeführte Luft schließlich in die Brennkammern der Brennkraftmaschine gelangt.

Die Herstellung der erfindungsgemäßen Sauganlage 1 erfolgt vorzugsweise wie folgt:

Zunächst werden die Saugrohrmodule 6 durch ein geeignetes Herstellverfahren, z.B. Blasformverfahren oder Spritzgußverfahren, hergestellt. Durch die Herstellung als separate Module ist es möglich, die Form der Saugrohrmodule 6 relativ einfach zu variieren, beispielsweise kann der Rohrdurchmesser, der Krümmungsradius und die Rohrlänge auf diese Weise an unterschiedliche Konfigurationen der Brennkraftmaschine angepaßt werden. Parallel zur Herstellung der Saugrohrmodule 6 können das Luftverteileroberteilmodul 3 und das Luftverteilerunterteilmodul 4 separat, z.B. durch ein herkömmliches Spritzgußverfahren hergestellt werden.

Die jeweils einem Flanschmodul 9 zugeordneten Saugrohrmodule 6 werden dann zumindest mit ihren Rohrenden 8 in ein Spritzgußwerkzeug eingelegt und gegebenenfalls ausgerichtet. Im Anschluß daran kann ein Spritzgußverfahren ablaufen, bei dem das jeweilige Flanschmodul 9 ausgebildet wird. Dabei ist das dem jeweiligen Flansch 9 zugeordnete Rohrende 8 der Saugrohrmodule 6 so ausgebildet, daß es bei dem Spritzvorgang beidseitig, d.h. bezüglich des Saugrohrmoduls 6 innen und außen, vom Material des Flanschmodules 9 eingefaßt wird. Darüber hinaus erweitert sich die Wandstärke des Saugrohrmoduls 6 in diesem Rohrende 8, so daß sich insgesamt eine hochwirksame Verankerung des Saugrohrmodules 6 im Flanschmodul 9 ausbildet. Das Rohrende 8 ist somit zumindest formschlüssig mit dem Flanschmodul 9 verbunden. Um die Verbindung zwischen Saugrohrmodul 6 und Flanschmodul 9 auch für eine lange Lebenszeit hochwertig fest und dicht auszubilden, wird das Flanschmodul 9 mittels eines speziellen Verfahrens derart an den Saugrohrmodulen 6 angebracht, daß sich eine stoffschlüssige Verbindung ausbildet. Dabei werden die Kunststoffe der beiden Module 6 und 9 im Verbindungsbereich nach Art eines Schweißvorganges miteinander verschmolzen. Die Kunststoffe sind dementsprechend kompatibel gewählt.

Im Anschluß daran werden die anderen Rohrenden 7 der Saugrohrmodule 6 mit dem Luftverteileroberteilmodul 3 verbunden, wozu hier der Anschluß des Saugrohrmodules 6 an das Luftverteilermodul 2 als Steckverbindung ausgebildet ist. Das dem Luftverteilermodul 2 zugeordnete Rohrende 7 ist dazu als Außenstutzen ausgebildet, und das Luftverteileroberteilmodul 3 weist einen Innenstutzen 14 auf. Die ineinandergesteckten Stutzen 7 und 14 können dann miteinander verbunden werden, wobei vorzugsweise ein Schweißverfahren angewandt wird, um eine möglichst innige, vorzugsweise stoffschlüssige oder chemische Verbindung zwischen dem Saugrohrmodul 6 und dem Luftverteilermodul 2 auszubilden. Ebenso kann eine Klebverbindung oder eine Schrumpfverbindung oder eine Kombination verschiedener Verbindungstechniken ausgebildet werden. Vor oder während der Anbindung des Luftverteilermoduls 2 an die Saugrohrmodule 6 kann gegebenenfalls eine Ausrichtung der Sauganlagenbestandteile durchgeführt werden.

Schließlich kann das Luftverteilerunterteilmodul 4 mit einem herkömmlichen Reibschweißverfahren an das Luftverteileroberteilmodul 3 angebunden werden. Es ist klar, daß die Verbindung der beiden Module 3 und 4 des Luftverteilermoduls 2 hier bereits vorab durchgeführt werden kann, so daß dementsprechend das komplette Luftverteilermodul 2 mit den Saugrohrmodulen 6 verbunden wird.

## Patentansprüche

1. Modular aufgebaute Sauganlage für eine Brennkraftmaschine mit einem Luftverteilermodul (2) aus Kunststoff, das an eine Luftzuführung der Brennkraftmaschine anschließbar ist, mit mehreren, jeweils separat vom Luftverteilermodul (2) und durch ein Blasformverfahren oder durch ein Spritzgußverfahren hergestellten einteiligen Saugrohrmodulen (6) aus Kunststoff, die jeweils an ihrem einen Rohrende (7) mit dem Luftverteilermodul (2) verbunden sind und die jeweils einer Brennkammer der Brennkraftmaschine zugeordnet sind, und mit mindestens einem einteiligen. Flanschmodul (9) aus Kunststoff, mit dem mindestens eines der Saugrohrmodule (6) an seinem anderen Rohrende (8) verbunden ist und das an der Brennkraftmaschine befestigbar ist.

2. Sauganlage nach Anspruch 1,
**dadurch gekennzeichnet,**
**dass** das zur Herstellung der Saugrohrmodule (6) verwendete Spritzgußverfahren mit einer Drehschiebertechnik oder mit einer Halbschalentechnik arbeitet.

3. Sauganlage nach einem der Ansprüche 1 oder 2,
**dadurch gekennzeichnet,**
**dass** jedes Flanschmodul (9) als Spritzteil, d.h. als ein durch ein Spritzgußverfahren hergestelltes Bauteil, ausgebildet ist, das an das wenigstens eine Saugrohrmodul (6) angespritzt ist, wobei das jeweilige Rohrende (8) des Saugrohrmoduls (6) so geformt ist, dass sich zwischen Saugrohrmodul (6) und Flanschmodul (9) eine formschlüssige Verbindung ausbildet.

4. Sauganlage nach einem der Ansprüche 1 bis 3,
**dadurch gekennzeichnet,**
**dass** zwei Flanschmodule (9) vorgesehen sind, die jeweils einer Zylinderbank der Brennkraftmaschine zugeordnet sind, wobei die nebeneinander angeordneten Saugrohrmodule (6) abwechselnd mit dem einen Flanschmodul (9) und mit dem anderen Flanschmodul (9) verbunden sind.

5. Sauganlage nach einem der Ansprüche 1 bis 4,
**dadurch gekennzeichnet,**
**dass** sich das Flanschmodul (9) entlang einer Seite des Luftverteilermoduls (2) parallel dazu erstreckt und dass das wenigstens eine Saugrohrmodul (6) in einem von dieser Seite abgewandten Bereich des Luftverteilermoduls (2) mit diesem verbunden ist.

6. Sauganlage nach einem der Ansprüche 1 bis 5,
**dadurch gekennzeichnet,**
**dass** die Saugrohrmodule (6) jeweils an der Oberseite des Luftverteilermoduls (2) mit diesem verbunden sind.

7. Sauganlage nach einem der Ansprüche 1 bis 6,
**dadurch gekennzeichnet,**
**dass** jedes Saugrohrmodul (6) durch ein Schweißverfahren mit dem Luftverteilermodul (2) verbunden ist.

8. Sauganlage nach einem der Ansprüche 1 bis 7,
**dadurch gekennzeichnet,**
**dass** das Luftverteilermodul (2) modular aufgebaut und aus einem einteiligen Luftverteileroberteilmodul (3) aus Kunststoff und aus einem einteiligen Luftverteilerunterteilmodul (4) aus Kunststoff besteht, wobei die Saugrohrmodule (6) mit dem Luftverteileroberteilmodul (3) verbunden sind.

9. Sauganlage nach einem der Ansprüche 1 bis 8,
**dadurch gekennzeichnet,**
**dass** die Module (2,3,4,6,9) aus Polyamid-Kunststoff hergestellt sind.

10. Sauganlage nach einem der Ansprüche 1 bis 9,
**dadurch gekennzeichnet,**
**dass** die Module (2,3,4,6,9) aus faserverstärktem, insbesondere glasfaser- oder kohlefaserverstärktem, Kunststoff, insbesondere Polyamid-Kunststoff, hergestellt sind.

11. Verfahren zur Herstellung einer Sauganlage nach einem der Ansprüche 1 bis 10,
**dadurch gekennzeichnet,**
**dass** die Saugrohrmodule (6) durch ein Blasformverfahren hergestellt werden,
**dass** die einem Flanschmodul (9) zugeordneten Rohrenden (8) in eine Spritzgußform eingebracht werden,
**dass** zur Ausbildung dieses Flanschmoduls (9) ein Spritzgußverfahren durchgeführt wird, bei dem die in die Spritzgußform eingebrachten Rohrenden (8) in das Material des Flanschmoduls (9) eingebettet werden, und
**dass** die dem Luftverteilermodul (2) zugeordneten Rohrenden (7) mit dem Luftverteilermodul (2) verbunden werden.

## Claims

1. An intake system with a modular design for an internal combustion engine, having an air distributor module (2) made of plastic which can be connected to an air intake of the internal combustion engine, having a plurality of one-piece intake manifold modules (6) made of plastic, each being produced separately from the air distributor module (2) an by a blow-molding method or by an injection-molding method, each being connected at its one pipe end (7) to the air distributor module (2) and each being assigned to one combustion chamber of the internal combustion engine, and having at least one flange module (9) made of plastic in one piece, to which at least one of the intake manifold modules (6) at its other pipe end (8) is connected and which can be mounted on the internal combustion engine.

2. An intake system according to Claim 1, **characterized in that** the injection-molding method used to produce the intake manifold modules (6) works with a rotary slide technique or with a half-shell technique.

3. An intake system according to Claims 1 or 2, **characterized in that** each flange module (9) is designed as an injection-molded part, i.e., as a part produced by an injection-molding method, which is integrally molded onto the minimum of one intake manifold module (6), where the respective pipe end (8) of the intake manifold module (6) is shaped in such a way that a form-fitting connection is created between the intake manifold module (6) and the flange module (9).

4. An intake system according to one of Claims 1 through 3, **characterized in that** two flange modules (9) are produced, each being assigned to one cylinder block of the internal combustion engine, with the intake manifold modules (6) which are arranged side-by-side being connected to one flange module (9) and to the other flange module (9) in alternation.

5. An intake system according to one of Claims 1 through 4, **characterized in that** the flange module (9) extends along one side of the air distributor module (2) and in parallel with it, and the minimum of one intake manifold module (6) is connected to an area of the air distributor module (2) that faces away from this side.

6. An intake system according to one of Claims 1 through 5, **characterized in that** the intake manifold modules (6) are each connected to the air distributor module (2) at the top.

7. An intake system according to one of Claims 1 through 6, **characterized in that** each intake manifold module (6) is joined to the air distributor module (2) by a welding method.

8. An intake system according to one of Claims 1 through 7, **characterized in that** the air distributor module (2) is modular in design and consists of a one-piece air distributor top part module (3) made of plastic and a one-piece air distributor bottom part module (4) made of plastic, where the intake manifold modules (6) are connected to the air distributor top part module (3).

9. An intake system according to one of Claims 1 through 8, **characterized in that** the modules (2, 3, 4, 6, 9) are made of a polyamide plastic.

10. An intake system according to one of Claims 1 through 9, **characterized in that** the modules (2, 3, 4, 6, 9) are made of a fiber-reinforced plastic, in particular a glass fiber-reinforced or carbon fiber-reinforced plastic, in particular a polyamide plastic.

11. A method of producing an intake system according to one of Claims 1 through 10, **characterized in that** the intake manifold modules (6) are produced by a blow-molding method; the pipe ends (8) assigned to a flange module (9) are introduced into an injection mold; this flange module (9) is produced by an injection-molding method wherein the pipe ends (8) introduced into the injection mold are embedded in the material of the flange module (9), and the pipe ends (7) assigned to the air distributor module (2) are connected to the air distributor module (2).

## Revendications

1. Installation d'admission de structure modulaire pour un moteur à combustion interne comprenant un module de distributeur d'air (2) en matière plastique, qui peut être raccordée à une arrivée d'air du moteur à combustion interne, plusieurs modules de tubulures d'admission (6) monobloc en matière plastique fabriqués chacun séparément du module de distributeur d'air (2) par un procédé de moulage par soufflage ou de moulage par injection, qui sont assemblés chacun à l'une de leurs extrémités de tubulure (7) avec le module de distributeur d'air (2) et sont associés chacun à une chambre de combustion du moteur à combustion interne, et au moins un module de bride (9) monobloc en matière plastique, avec lequel est assemblé au moins l'un des modules de tubulures d'admission (6) à son autre extrémité de tubulure (8) et qui peut être fixé sur le moteur à combustion interne.

2. Installation d'admission suivant la revendication 1,
**caractérisée en ce**
**que** le procédé de moulage par injection appliqué pour la fabrication des modules de tubulures d'admission (6) fonctionne avec une technique de vanne tournante ou de demi-coquille.

3. Installation d'admission suivant l'une des revendications 1 et 2,
**caractérisée en ce**
**que** chaque module de bride (9) est réalisé comme pièce injectée, c'est-à-dire sous forme d'un composant fabriqué par un procédé de moulage par injection, qui est injecté sur le au moins un module de tubulure d'admission (6), l'extrémité de tubulure respective (8) du module de tubulure d'admission (6) étant formée de telle sorte qu'il se forme un assemblage par coopération de forme entre le module de tubulure d'admission (6) et le module de bride (9).

4. Installation d'admission suivant l'une des revendications 1 à 3,
**caractérisée en ce**
**qu'**il est prévu deux modules de brides (9) associés chacun à un bloc-cylindres du moteur à combustion interne, les modules de tubulures d'admission (6) juxtaposés étant assemblés alternativement avec l'un des modules de bride (9) et avec l'autre module de bride (9).

5. Installation d'admission suivant l'une des revendications 1 à 4,
**caractérisée en ce**
**que** le module de bride (9) s'étend le long d'un côté du module de distributeur d'air (2) parallèlement à ce dernier et
**que** le au moins un module de tubulure d'admission (6) est assemblé avec le module de distributeur d'air (2) dans une zone de ce dernier opposée à ce côté.

6. Installation d'admission suivant l'une des revendications 1 à 5,
**caractérisée en ce**
**que** les modules de tubulures d'admission (6) sont assemblés chacun avec le module de distributeur d'air (2) sur le côté supérieur de ce dernier.

7. Installation d'admission suivant l'une des revendications 1 à 6,
**caractérisée en ce**
**que** chaque module de tubulure d'admission (6) est assemblé avec le module de distributeur d'air (2) par un procédé de soudage.

8. Installation d'admission suivant l'une des revendications 1 à 7,
**caractérisée en ce**
**que** le module de distributeur d'air (2) a une structure modulaire et est constitué d'un module de partie supérieure de distributeur d'air (3) monobloc en matière plastique et d'un module de partie inférieure de distributeur d'air (4) monobloc en matière plastique, les modules de tubulures d'admission (6) étant assemblés avec le module de partie supérieure de distributeur d'air (3).

9. Installation d'admission suivant l'une des revendications 1 à 8,
**caractérisée en ce**
**que** les modules (2, 3, 4, 6, 9) sont fabriqués en matière plastique polyamide.

10. Installation d'admission suivant l'une des revendications 1 à 9,
**caractérisée en ce**
**que** les modules (2, 3, 4, 6, 9) sont fabriqués en matière plastique, notamment en matière plastique polyamide, renforcée par des fibres, en particulier renforcée par des fibres de verre ou des fibres de carbone.

11. Procédé de fabrication d'une installation d'admission suivant l'une des revendications 1 à 10,
**caractérisée en ce**
**que** les modules de tubulures d'admission (6) sont fabriqués par un procédé de moulage par soufflage,
**que** les extrémités de tubulures (8) associées à un module de bride (9) sont introduites dans un moule à injection,
**qu'**un procédé de moulage par injection, dans lequel les extrémités de tubulures (8) introduites dans le moule d'injection sont enrobées dans le matériau du module de bride (9), est mis en oeuvre pour la réalisation de ce module de bride (9), et
**que** les extrémités de tubulures (7) associées au module de distributeur d'air (2) sont assemblées avec le module de distributeur d'air (2).
